# EUROPÄISCHE PATENTSCHRIFT

(11) **EP 0 462 449 B1**
(45) Veröffentlichungstag und Bekanntmachung des Hinweises auf die Patenterteilung: **07.09.1994**
(21) Anmeldenummer: 91109233.6
(22) Anmeldetag: 06.06.1991
(51) Int. Cl.: F16H 63/38

(54) **Positioniervorrichtung für Schaltwellen in Wechselgetrieben**
Positioning device for the shifting rods in change speed gearing
Dispositif de positionnement d'arbre de commande pour boîtes de vitesses

(30) Priorität: 18.06.1990 DE 4019332
(43) Veröffentlichungstag der Anmeldung: 27.12.1991
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Wilhelmy, Egon, W-5340 Bad Honnef 1 (DE); Spahl, Edwin, W-5000 Köln 91 (DE)
(74) Vertreter: Messulam, Alec Moses

(56) Entgegenhaltungen:
- DE-U- 6 940 196
- US-A- 3 677 096
- US-A- 4 569 247

## Beschreibung

Die Erfindung bezieht sich auf eine Positioniervorrichtung für Schaltwellen in Wechselgetrieben, der im Oberbegriff des Patentanspruches 1 erläuternden Art.

Aus der DE-PS 36 02 157 ist eine Positioniervorrichtung für eine Schaltwelle in einem Wechselgetriebe von Kraftfahrzeugen, der im Oberbegriff des Patentanspruches 1 erläuterten Art bekannt.

Bei dieser Positioniervorrichtung für die axiale Lage der Schaltwelle ist die Schaltwelle in einer Lagerbohrung im Gehäuse radial drehbar und axial schiebbar aufgenommen um Schalt-, Wähl- und Einrück-Bewegungen ausführen zu können. Über Rastmulden in der Schaltwelle und über eine im Gehäuse ortsfest gehaltene Bolzen-Federanordnung ist die Schaltwelle axial positionierbar.

Die bekannte Positioniervorrichtung weist den Nachteil auf, daß die Rastmulden unmittelbar an der Schaltwelle ausgebildet werden müssen und daß der hier durch eine Kugel gebildete Rastbolzen durch eine im Gehäuse ortsfest gehaltene Hülse, die auch die Feder aufnimmt, in seiner axialen Lage bestimmt ist.

Die axial Lage der montierten Schaltwelle zur Lage der ortsfest im Gehäuse gehaltenen Hülse kann durch die Summierung der üblichen Fertigungstoleranzen zu erheblichen Abweichungen der durch die Positioniereinrichtung festgelegten Postitionen von den erwünschten axialen Schaltpositionen der Schaltwelle führen.

Aus der DE-PS 36 03 609 ist eine Positioniervorrichtung für eine Schaltwelle eines Wechselgetriebes von Kraftfahrzeugen bekannt, bei der die Rastmulden für die radiale Lage der Schaltwelle an einem mit der Schaltwelle verbundenen Bauteil ausgebildet sind und bei der die Rastbolzen in Form von Kugeln in einem Halteteil ausgebildet sind, das federbelastet axial an den mit der Schaltwelle verbundenen Bauteil angepreßt wird aber radial ortsfest im Gehäuse gehalten ist.

Durch die Lage der Rastmulden in dem mit der Schaltwelle verbundenen Bauteil wird die radiale Lage der Schaltwelle festgelegt, wobei durch die Neigung der Verbindungsflächen zwischen den Rastmulden auch eine radiale Rückführung der Schaltwelle in ihre neutrale Schaltgasse bewirkt werden kann, sobald die Kugeln aus ihren Rastmulden herausbewegt werden.

Diese bekannte Positioniervorrichtung weist den Nachteil auf, daß an der Schaltwelle zusätzliche Bauteile mit erheblichem Platzbedarf angeordnet werden müssen und daß mit ihr nur die radiale Positionierung bzw. eine sogenannte Schalt- wellenrückführung nicht aber auch eine axiale Positionierung erreicht wird.

Die Aufgabe der Erfindung ist es, eine Positioniervorrichtung für Schaltwellen in Wechselgebtrieben, der im Oberbegriff des Patentanspruches 1 erläuterten Art derart zu verbessern, daß mit einem geringen Herstellungs- und Montageaufwand und bei geringem Platzbedarf eine Vorrichtung geschaffen wird, die nicht nur eine axiale sondern auch eine radiale Positionierung der Schaltwelle und bei Bedarf auch eine Schaltwellenrückführung bereitstellen kann.

Gemäß der Erfindung wird diese Aufgabe gelöst, indem eine Positioniervorrichtung nach dem Oberbegriff des Patentanspruches 1, die im Kennzeichenteil des Patentanspruches 1 aufgezeigten Merkmale aufweist.

In den Patentansprüchen 2 bis 4 sind weitere Ausführungsformen für die Positioniervorrichtung bei axialer Positionierung erläutert.

Dadurch, daß die Schaltwelle in einem erweiterten Abschnitt ihrer Lagerbohrung von einem konzentrisch angeordneten, radial aufweitbaren Federglied umfaßt ist, das an einander zugewandten Rändern Rasten aufweist und axial im Gehäuse festgelegt ist und die Schaltwelle mit einem radial vorragenden sich zwischen die einander zugewandten Ränder erstreckenden Bolzen versehen ist, wird mit einem minimalen Bau- und Montageaufwand und bei geringstem Platzbedarf eine axiale Positionierung für eine Schaltwelle geschaffen, die durch ihr Minimum an Bauteilen und ihrer engen aneinanderliegenden Anordnung ihrer Bauteile mit geringen Toleranzsummierungen belastet ist.

Dadurch, daß das konzentrisch angeordnete, radial aufweitbare Federglied von einer C-förmigen zylindrischen Federhülse gebildet wird, kann dieses in einfacher Weise durch Stanzen und nachfolgendem Biegen hergestellt werden.

In gleicher Weise kann das Federglied auch aus einem entsprechend geeigneten Kunststoff, z. B. als Spritzgußteil hergestellt werden. In diesem Fall können durch die Wahl des Materials die erwünschten Federeigenschaften und Gleiteigenschaften optimal abgestimmt werden.

Dadurch, daß das konzentrisch angeordnete, radial aufweitbare Federglied von einem annähernd spulenförmigen Drahtbiegeteil gebildet ist, das zwei über zwei Ringteile verbundene, einander gegenüberliegende Randteile aufweist, kann das Federglied in besonders einfacher Weise auf Drahtbiegeautomaten hergestellt werden.

Dadurch, daß die zylindrische Federhülse oder die Ringteile des Drahtbiegeteiles spiralförmig verlaufen und mit ihren versetzten Rändern bzw. Randteilen mit entsprechenden auf den Bolzen drehbar aufgenommenen Rillen-Rollringen zusammenwirken, kann erforderlichenfalls die bei dieser Vorrichtung auftretende Gleitreibung durch Rollreibung ersetzt werden.

In den Patentansprüchen 5 bis 10 sind Positioniervorrichtungen nach dem Anspruch 1 derart erweitert, daß sie zusätzlich zur axialen Positionierung eine radiale Positionierung und gewünschtenfalls auch eine Schaltwellenrückführung übernehmen können.

Dadurch, daß das konzentrisch zur Schaltwelle angeordnete, radial aufweitbare Federglied mit an zumindest einem axialen Ende angeordneten Rasten versehen ist und diese mit einer axial wirkenden Bolzen-Federanordnung zusammenwirken, wird unter Beibehaltung im wesentlichen der gleichen Bauteile sowohl eine axiale als auch eine radiale Positionierung erreicht.

Dadurch, daß die C-förmige Federhülse mit den an ihrem axialen Ende angeordneten Rasten mit einer axial federnden Zunge an der gegen Verdrehen festgelegten Haltescheibe zusammenwirkt, sind nur geringe Modifizierungen der ursprünglichen C-förmigen Federhülse und der Haltescheibe erforderlich.

Dadurch, daß das Drahtbiegeteile mit den an seinem einen Ende angeordneten Rasten mit einem im Gehäuse festgelegten Raststift zusammenwirkt, wird eine radiale Positionierung durch das axiale Nachgeben der Ringteile bewirkt.

Um auch hier von der Gleitreibung zur Rollreibung übergehen zu können, kann die C-förmige Federhülse an zumindest einem ihrer axialen Enden mit einer abgewinkelten Flanschfläche versehen werden, in der die Rasten ausgebildet sind und diese wirken mit einer Kugel-Federanordnung zusammen, die in einer axialen Bohrung in einem Abschlußteil für den erweiterten Abschnitt der Lagerbohrung angeordnet ist.

Die C-förmige Federhülse kann hierbei auch an beiden axialen Enden mit entsprechenden Flanschflächen mit entsprechenden Rasten versehen sein, die beide mit jeweils einer Kugel-Federanordnung in einer axialen Bohrung im Gehäuse bzw. im Abschlußteil zusammenwirken, um die ansonsten von der axialen Druckkomponente bewirkte erhöhte Gleitreibung an der einen Seite der C-förmigen Federhülse in eine Rollreibung umzusetzen.

Auch in diesem Fall kann das Federglied aus Kunststoff-Formteil ausgebildet sein, in dem z.B. die Kugel-Federanordnung aufgenommen ist und mit Rasten am Abschlußteil zusammenwirken.

Obwohl durch die Gestaltung der Verbindungsflächen zwischen den einzelnen Rasten in Zusammenwirken mit den entsprechenden radialen und axialen Federkräften jeweils sowohl eine axiale als auch eine radiale Schaltwellenrückführung bewirkt werden kann, sobald der entsprechende Bolzen aus seiner entsprechenden Raste ausgehoben wird, kann es sein, daß die für die radiale Schaltwellenrückführung erwünschten Rückstellkräfte durch die in den vorhergehenden Ausführungen nur axial wirkenden Federkräfte nicht ohne weiteres aufgebracht werden können.

In den Figuren 17 bis 19 ist daher eine weitere Ausführungsform der C-förmigen Federhülse aufgezeigt, bei der die Federhülse in ihrem den Längsschlitz gegenüberliegenden Bereich mit einer axialen halbrunden Falte versehen ist, die in einer entsprechenden axialen, halbrunden Nut im erweiterten Abschnitt der Lagerbohrung gegen radiales Verdrehen festgelegt ist und zur Vorwahl einer Schaltgasse die C-förmige Federhülse somit einseitig aufgeweitet werden muß.

Dadurch wird eine ständige und sichere Rückführung der Schaltwelle in ihre Neutral-Schaltgasse erzwungen.

Die Erfindung wird anhand der in den Zeichnungen gezeigten Ausführungsbeispielen näher erläutert. Es zeigt:
- Fig. 1: einen vertikalen Schnitt durch die Aufnahme einer Schaltwelle in einem Gehäuse mit der erfindungsgemäßen Positioniervorrichtung;
- Fig. 2: eine Draufsicht auf die C-förmige Federhülse in Fig. 1;
- Fig. 3: einen Schnitt entlang der Linie III-III in Fig. 1;
- Fig. 4: einen vertikalen Schnitt durch die Aufnahme einer Schaltwelle in einem Gehäuse mit einer weiteren Ausführungsform der erfindungsgemäßen Positioniervorrichtung als Drahtbiegeteil;
- Fig. 5: eine Draufsicht auf das Drahtbiegeteil in Fig. 4;
- Fig. 6: einen Schnitt entlang der Linie VI-VI in Fig. 4;
- Fig. 7: einen ähnlichen Schnitt wie Fig. 6 bei einer weiteren Ausführungsform des Drahtbiegeteiles in Verbindung mit Rillen-Rollringen;
- Fig. 8: einen vertikalen Schnitt ähnlich Fig. 1 mit einer erfindungsgemäßen Positioniervorrichtung zur axialen und radialen Positionierung;
- Fig. 9: eine Unteransicht der C-förmigen Federhülse in Fig. 8;
- Fig. 10: eine Ansicht in Richtung des Pfeiles X in Fig. 8;
- Fig. 11: einen ähnlichen Schnitt wie Fig. 1 mit einer weiteren Ausführungsform der erfindungsgemäßen Positioniervorrichtung zur axialen und radialen Positionierung;
- Fig. 12: eine Unteransicht des Drahtbiegeteiles in Fig. 11;
- Fig. 13: eine Ansicht in Richtung des Pfeiles XIII in Fig. 11;
- Fig. 14: einen ähnlichen Schnitt wie Fig. 1 mit einer weiteren Ausführungsform der erfindungsgemäßen Positioniervorrichtung für axiale und radiale Positionierung;
- Fig. 15: eine Unteransicht der C-förmigen Federhülse in Fig. 14;
- Fig. 16: eine Ansicht in Richtung des Pfeiles XVI in Fig. 14; bei abgenommenem Abschlußteil;
- Fig. 17: einen ähnlichen Schnitt wie Fig. 1 mit einer weiteren Ausführung von der erfindungsgemäßen Positioniervorrichtung;
- Fig. 18: eine Draufsicht auf die C-förmige Federhülse in Fig. 17 und
- Fig. 19: einen Schnitt entlang der Linie XIX-XIX in Fig. 17.

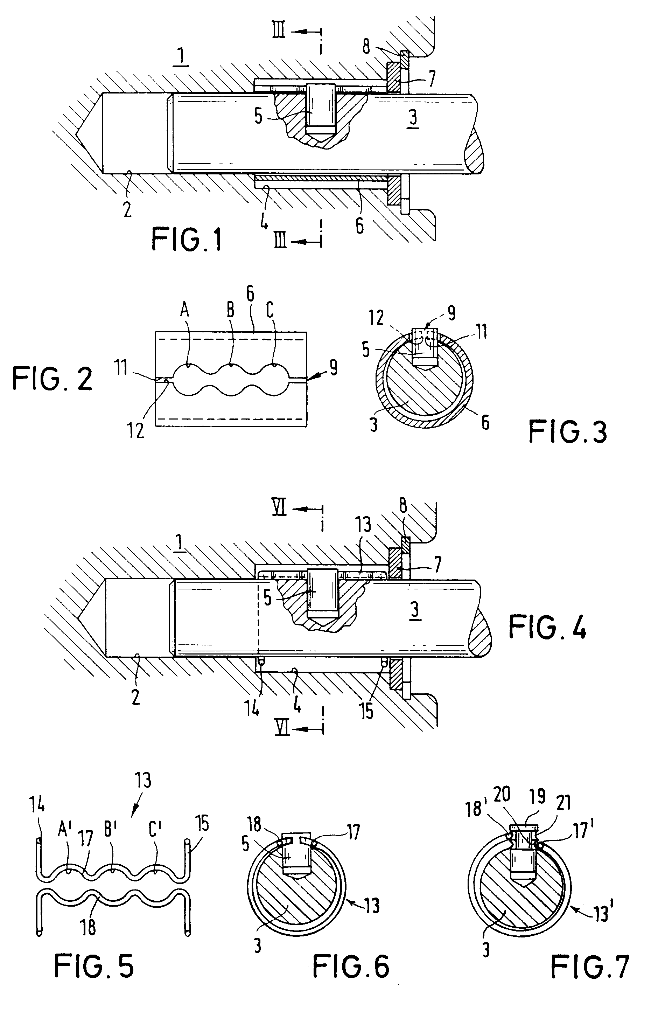

In Fig. 1 ist in einem Gehäuse 1 eine Lagerbohrung 2 für eine radial drehbare und axial schiebbare Schaltwelle 3 vorgesehen. Selbstverständlich kann anstelle der einfachen Gleitführung in der Lagerbohrung 2 für die Schaltwelle 3 auch eine allgemein bekannte Führung mit Hilfe einer Kugelhülse vorgesehen werden.

Nachfolgend der Lagerbohrung 2 ist im Gehäuse ein Abschnitt 4 mit erweitertem Durchmesser vorgesehen, dessen axiale Erstreckung größer sein muß als die vorgesehene axiale Verschiebbarkeit der Schaltwelle 3.

Etwa in der Mitte des Abschnittes 4 ist die sich in ihrer Neutrallage befindliche Schaltwelle 3 mit einen Bolzen 5 versehen, der sich radial etwas nach außen erstreckt. In dem erweiterten Abschnitt 4 ist weiterhin ein die Schaltwelle 3 konzentrisch umfassendes, radial aufweitbares Federglied 6 angeordnet, das über eine Haltescheibe 7 und einen Sprengring 8 in axialer Richtung im Gehäuse 1 festgelegt ist.

Das radial aufweitbare Federglied 6 kann nach der aus den Figuren 1 bis 3 ersichtlichen Ausführungsform als zylindrische Federhülse 6 aus Federstahl gebildet sein, die einen axialen Längsschlitz 9 aufweist, durch den einander zugewandte Ränder 11 und 12 gebildet werden. In den einander zugewandten Rändern 11 und 12 der Federhülse 6 sind Rasten A, B und C ausgebildet, die über entsprechend abgerundete Verbindungsflächen ineinander übergehen.

Die Federhülse 6 kann auch als ein Kunststoff-Formteil aus einem geeigneten Material mit hohen Feder- und Gleiteigenschaften hergestellt werden.

Bei der Montage wird zunächst die Haltescheibe 7 und die C-förmige Federhülse 6 auf die Schaltwelle 3 aufgeschoben und danach der Bolzen 5 radial eingesetzt. Die so vormontierte Schaltwelle 3 wird mit dieser Anordnung in den erweiterten Abschnitt 4 der Lagerbohrung 2 axial eingeschoben und danach wird der C-förmige Sprengring 8 aufgesetzt, der die vormontierte Anordnung axial fixiert.

Wird nun die Schaltwelle 3 in ihrer Lagerbohrung 2 axial verschoben, so kann die C-förmige Federhülse 6 diese axiale Bewegung nicht mitmachen, da sie von der Haltescheibe 7 und dem Sprengring 8 festgehalten wird. Durch entsprechenden Druck oder Zug an der Schaltwelle 3 zwingt der Bolzen 5, der sich in der mittleren Rastmulde B der Federhülse 6 befindet, über die abgerundeten Verbindungsflächen die C-förmige Federhülse 6 sich federnd radial aufzuweiten und die Schaltwelle 3 kann sich in ihre nächste vorbestimmte axiale Schaltposition bewegen.

Durch die entsprechenden Neigungen an den Verbindungsflächen zwischen den Rastmulden A, B und C kann die Höhe dieser beim Vorwählen oder Schalten zu überwindenden Kraft entsprechend festgelegt werden.

Die Rastmulden A und C können hierbei gleichzeitig zur Positionierung als auch zur Schaltwegbegrenzung dienen.

In den Figuren 4 bis 6 ist eine weitere Ausführungsform der erfindungsgemäßen Positioniervorrichtung gezeigt, bei der das radial aufweitbare Federglied als ein einteiliges Drahtbiegeteil 13 ausgebildet ist. Das Drahtbiegeteil 13 wird von zwei Ringteilen 14 und 15 gebildet, die miteinander über einander gegenüberliegende Randteile 17 und 18 verbunden sind, an denen wieder entsprechende Rastmulden A', B' und C' ausgebildet sind.

Das Drahtbiegeteil 13 bildet mit seinen Ringteilen 14 und 15 und den Randteilen 17 und 18 ein etwa spulenförmiges Gebilde, das konzentrisch zur Schaltwelle 3 innerhalb des Abschnittes 4 angeordnet ist.

Das Drahtbiegeteil 13 ist wieder über eine entsprechende Haltescheibe 7 und einen C-förmigen Sprengring 8 axial im Gehäuse 1 festgelegt.

Die Funktionsweise dieser Anordnung ist die gleiche wie in Verbindung mit den Figuren 1 bis 3 beschrieben wurde.

Für den Fall, daß die sich zwischen dem Bolzen 5 und der C-förmigen Federhülse 6 bzw. dem Drahtbiegeteil 13 ergebende Gleitreibung die Positionierung zu schwergängig gestalten sollte, ist es im Rahmen der Erfindung auch möglich, die zylindrische Federhülse bzw. das Drahtbiegeteil 13' in Axialansicht spiralförmig auszubilden, so daß ihre dann versetzten Ränder bzw. Randteile 17' und 18' mit an einem Rastbolzen 19 in übereinanderliegenden Ebenen vorgesehene Rillen-Rollringe 20 und 21 rollend zusammenwirken. (Siehe Fig. 7)

Die erfindungsgemäße Positioniervorrichtung wurde in Zusammenhang mit den Fig. 1 bis 7 für eine Schaltvorrichtung eines manuell geschalteten Wechselgetriebes beschrieben, die erfindungsgemäße Positioniervorrichtung kann jedoch in gleich günstiger Weise zum Festlegen der axialen Schaltpositionen des Handwählhebels eines automatischen Getriebes verwendet werden, wobei die erfindungsgemäße Positioniervorrichtung durch ihre Hülsenform für eine in unmittelbarem Anschluß an das Schaltschieberventil vorgesehene Anordnung besonders günstig ist.

Da die erfindungsgemäße Positioniervorrichtung in Form der C-förmigen Federhülse oder des Drahtbiegeteiles nur axial festgelegt ist, können diese Bauteile radiale Bewegungen der Schaltwelle folgen und so für die Vorwahl- und Schaltbewegungen an einem Handschalthebel den verschiedensten Schaltschemen problemlos folgen.

Selbstverständlich können je nach Bedarf mehr als die nur in den Zeichnungen gezeigten drei axialen Positionierungen vorgesehen werden.

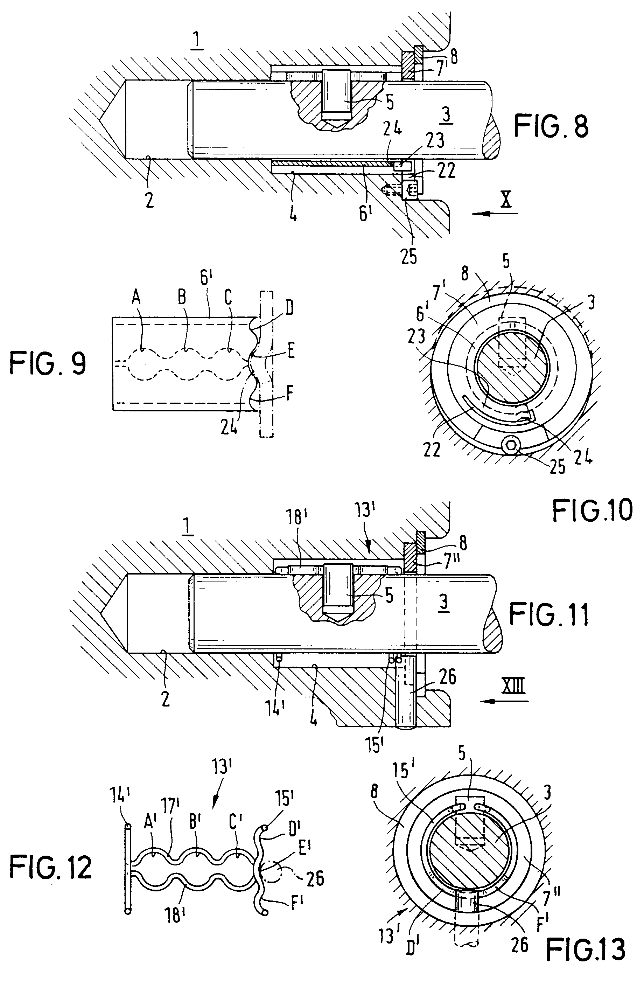

In Verbindung mit den Figuren 8 bis 10 wird ein weiteres Ausführungsbeispiel der erfindungsgemäßen Positioniervorrichtung beschrieben, bei der für gleiche Bauteile die gleichen Bezugszeichen und für geringfügig modifizierte Bauteile ebenfalls die gleichen lediglich mit einem Strichindex modifizierten Bezugszeichen verwendet werden.

Fig. 8 zeigt wieder einen Schnitt ähnlich Fig. 1 mit den bekannten Bauteilen, wobei lediglich die C-förmige Federhülse 6' nunmehr an ihrem einen axialen Ende mit weiteren Rasten D, E und F versehen ist, die mit einer axial wirkenden Bolzen-Federanordnung zusammenwirken.

In besonders einfacher Weise ist diese axial federnde Bolzen-Federanordnung durch eine modifizierte Haltescheibe 7' gebildet.

Aus der Haltescheibe 7' ist durch einen Freischnitt 22 eine Federzunge 23 gebildet, die einen axial vorspringenden Bolzenkopf 24 bildet, der mit den Rasten D, E und F zusammenwirkt. Die Haltescheibe 7' muß hierzu über eine Schraube 25 verdrehfest im Gehäuse 1 festgelegt werden.

Die Haltescheibe 7' wird an ihrem übrigen Umfang wieder über den C-förmigen Sprengring 8 axial festgehalten.

Wird die Schaltwelle 3 axial bewegt, so ist die Funktion die gleiche wie sie vorhergehend beschrieben wurde.

Während einer radialen Drehung der Schaltwelle 3 nimmt der Bolzen 5 die C-förmige Federhülse 6' radial mit und durch axiales Zurückfedern der Federzunge 23 kann der Bolzenkopf 24 in Verbindung mit den Rasten D, E und F für eine entsprechende radiale Positionierung der Schaltwelle 3 sorgen. Durch die entsprechende Ausbildung der Verbindungsflächen zwischen den Rasten D, E und F kann durch die axial einwirkende Kraft der Federzunge 21 auch eine gewisse radiale Schaltwellenrückführung bewirkt werden.

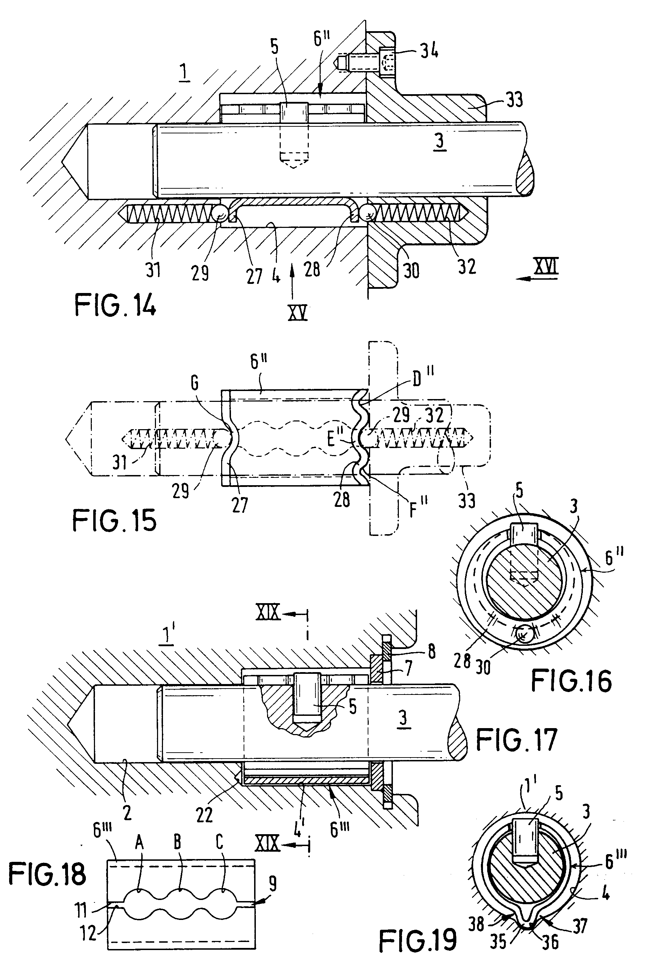

In den Figuren 11 bis 13 ist eine weitere Ausführungsform einer erfindungsgemäßen Positioniervorrichtung sowohl mit axialer als auch radialer Positionierung gezeigt. Das hier anstelle der C-förmigen Federhülse zur Anwendung gelangende Drahtbiegeteil 13' macht das Erreichen einer radialen Positionierung besonders einfach, da die hierfür erforderlichen Rasten D', E' und F' in einfacher Weise an dem einen Ringteil 15'in dessen den Randteilen 17' und 18' abliegenden Bereich ausgebildet werden können, das gleichzeitig in der Lage ist eine entsprechende axiale Federkraft bereitzustellen so daß nur noch ein entsprechend radial vorstehender Bolzenstift 26 erforderlich ist, der entsprechend mit den Rasten zusammenwirkt. Hierzu ist es noch erforderlich, daß die Haltescheiben 7'' C-förmig ausgebildet wird, damit dem Bolzenstift 26 der Zutritt zu den Rasten D', E' und F' freigehalten wird. Der C-förmige Sprengring 8 sichert wieder die axiale Festlegung der Anordnung ab.

In den Figuren 14 bis 16 ist eine weitere Ausführungsform der erfindungsgemäßen Positioniervorrichtung gezeigt, bei der wieder die bekannten Bauteile in der bekannten Anordnung vorliegen. Lediglich die C-förmige Federhülse 6'' ist an ihren beiden axialen Enden in dem ihrem Längsschnitt 9 gegenüberliegenden Bereich mit nach außen abgewinkelten Flanschflächen 27 und 28 versehen, an denen entsprechende Rasten D'', E'' und F'' ausgebildet sind und die mit entsprechenden Kugeln 29 und 30 die von Federn 31 und 32 belastet sind zusammenwirken. Die axiale Festlegung der C-förmigen Federhülse 6'' erfolgt hierbei durch ein Abschlußteil 33, das in geeigneter Weise am Gehäuse 1 z.B. über Schrauben 34 befestigt wird.

Eine mittlere Raste G an der Flauschfläche 27 sorgt für die Schaltwellenrückführung.

Die Anordnung der Kugeln und der Federn in axialen Bohrungen im Gehäuse 1 bzw. im Abschlußteil 33 ist nur beispielhaft aufgezeigt. Selbstverständlich können die entsprechenden Kugeln auch durch tellerfederartige Anordnungen abgestützt werden.

In den Figuren 17 bis 19 ist eine weitere Ausführungsform der erfindungsgemäßen Positioniervorrichtung gezeigt, bei der wieder die bekannten Bauteile in ihrer Anordnung vorliegen und lediglich die C-förmige Federhülse 6''' modifiziert ist.

Die C-förmige Federhülse 6''' ist an ihrer ihrem Längsschlitz 9 gegenüberliegenden Seite mit einer halbrunden Falte 35 versehen, die in einer entsprechenden halbrunden Nut 36 im Gehäuse 1 gegen radiales Verdrehen festgelegt wird.

Die Funktion der axialen Positionierung in der Neutral-Schaltgasse der Schaltwelle 3 bleibt wie bei den früher beschriebenen Ausführungsbeispielen unverändert.

Bei Vorwahl der Schaltgasse für den 1. und 2. Gang oder für den 5. und Rückwärtsgang muß die C-förmige Federhülse 6''' radial einseitig um einen Betrag von ca. 15° (Schwenkbereich der Schaltwelle bei der Schaltgassenvorwahl) aufgeweitet werden und übt hierdurch auf die Schaltwelle 3 eine Kraft aus, die die Schaltwelle 3 stets wieder in die Neutral-Schaltgasse zurückzudrücken sucht. Dieses einseitige Aufweiten ist im erweiterten Bereich 4' der Lagerbohrung 2 ohne weiteres möglich.

Der Reibungsschluß in den Rasten A, B und C der Axial-Positionierung wird durch diese radiale Kraft zwar erhöht, dadurch, daß in der Neutral-Schaltgasse beide Ränder 11 und12 der C-förmigen Federhülse 6''' am Bolzen 5 anliegen bzw. entlanggleiten, in den beiden anderen Schaltgassen jedoch nur jeweils eine Randkante 11 oder 12 der C-förmigen Federhülse 6''' an dem radialen Bolzen 5 anliegt bzw. entlanggleitet, kann bei entsprechender Auslegung etwa die gleiche Kraft für die Axial-Positionierung in allen drei Schaltgassen erreicht werden.

Durch die Ausbildung der Übergangsrundungen 37 und 38 an der halbrunden Falte 35 an der C-förmigen Federhülse 6''' in der Weise, daß sich diese an den Kanten der halbrunden Nut 36 früher oder später abstützt, ist auch das Erreichen unterschiedlicher radialer Rückstellkräfte aus der Schaltgasse des 1. und 2. bzw. 5. und Rückwärtsganges, wie dies bereits bekannt ist, möglich.

Die halbrunde Nut 36 im Bereich der Lagerbohrung 2 kann in bekannter Weise durch Einbringen einer ersten kleinen Bohrung im Gehäuse 1 erfolgen, die darauffolgend durch Bohren des erweiterten Abschnittes 4 geöffnet wird.

## Patentansprüche

1. Positioniervorrichtung für Schaltwellen (3) in Wechselgetrieben, die in einem Gehäuse (1) radial drehbar und axial schiebbar zum Ausführen von Schalt-Wähl- und Einrück-Bewegungen angeordnet sind und über Rasten-Bolzen-Federanordnungen axial und/oder radial positionierbar sind, **dadurch gekennzeichnet,** daß
- die Schaltwelle (3) in einem erweiterten Abschnitt (4) ihrer Lagerbohrung (2) von einem konzentrisch angeordneten, radial aufweitbaren Federglied (6 bzw. 13) umfaßt ist, das an einander zugewandten Rändern (11 und 12 bzw. 17 und 18) Rasten (A, B und C bzw. A', B' und C') aufweist und axial im Gehäuse (1) festgelegt ist und
- die Schaltwelle (3) mit einem radial vorragenden, sich zwischen die einander zugewandten Ränder (11 und 12 bzw. 17 und 18) erstreckenden Bolzen (5) versehen ist.

2. Positioniervorrichtung nach Anspruch 1, **dadurch gekennzeichnet,** daß
- das konzentrisch angeordnete, radial aufweitbare Federglied von einer C-förmigen, zylindrischen Federhülse (6) aus Federstahl oder einem entsprechenden Kunststoff gebildet ist.

3. Positionioervorrichtung nach Anspruch 1, **dadurch gekennzeichnet,** daß
- das konzentrisch angeordnete, radial aufweitbare Federglied von einem annähernd spulenförmigen Drahtbiegeteil (13) gebildet ist, das über Ringteile (14 und 15) einander gegenüberliegende Randteile (17 und 18) aufweist.

4. Positionioervorrichtung nach den Ansprüchen 1 bis 3, **dadurch gekennzeichnet,** daß
- die radial aufweitbaren Federglieder (13) in Axialsicht spiralförmig verlaufen und hierdurch radial versetzte einander gegenüberliegende Ränder (17' und 18') bilden, die mit entsprechenden, an einem modifizierten Bolzen (19) aufgenommenen Rillen-Rollringen (20 und 21) rollend zusammenwirken.

5. Positionioervorrichtung nach den Anspruch 1, **dadurch gekennzeichnet,** daß
- das konzentrisch zur Schaltwelle (3) angeordnete, radial aufweitbare Federglied (6' bzw. 13') mit an zumindest einem axialen Ende angeordneten zusätzlichen Rasten (D, E und F) versehen ist und
- diese mit einer axial wirkenden Bolzen-Federanordnung (23 bzw. 26) zusammenwirken.

6. Positioniervorrichtung nach Anspruch 5, **dadurch gekennzeichnet,** daß
- die C-förmige Federhülse (6') mit ihren Rasten (D. E und F) mit einer auf der Haltescheibe (7') durch einen Schlitz (22) freigeschnittenen Federzunge (23), die einen Bolzenkopf (24) bildet, zusammenwirkt, wobei die Haltescheibe (7') über eine Schraube (25) gegen Verdrehen festgelegt ist.

7. Positioniervorrichtung nach Anspruch 5, **dadurch gekennzeichnet,** daß
- das Drahtbiegeteil (13') mit seinen Rasten (D', E' und F') mit einem im Gehäuse (1) festgelegten Bolzenstift (26) zusammenwirkt, wobei der Ringteil (15') die axiale Federkraft bereitstellt.

8. Positioniervorrichtung nach Anspruch 5, **dadurch gekennzeichnet,** daß
- die C-förmige Federhülse (6'') zumindest an einem axialen Ende mit einer radialen Flanschfläche (28) versehen ist, an der die Rasten (D'', E'' und F'') ausgebildet sind und eine diesen gegenüberliegende Kugel-Federanordnung (30/32) in einer axialen Bohrung in einem Abschlußteil (33) angeordnet ist.

9. Positioniervorrichtung nach Anspruch 8, **dadurch gekennzeichnet,** daß
- die C-förmige Federhülse (6'') an dem dem Abschlußteil (33) gegenüberliegenden axialen Ende mit einer weiteren abgewinkelten Flanschfläche (27) versehen ist, in der eine weitere, mittlere Raste (G) ausgebildet ist, die mit einer weiteren Kugel-Federanordnung (29/31) zusammenwirkt.

10. Positioniervorrichtung nach Anspruch 1, **dadurch gekennzeichnet,** daß
- das die Schaltwelle (3) im erweiterten Abschnitt (4') ihre Lagerbohrung (2) umfassende, radial aufweitbare Federglied (6''') an ihrer ihrem Längsschlitz (9) gegenüberliegenden Seite mit einer axialen, halbrunden Falte (35) versehen ist, die in einer halbrunden Nut (36) im Gehäuse (1') verdrehfest festgelegt ist.

## Claims

1. A positioning device for gear-shift shafts (3) in transmissions which are radially rotatably and axially slideably arranged in a housing (1) for performing gear-shift selection and engagement movements and can be axially and/or radially positioned via recess/bolt spring arrangements, characterised in that
- the gear-shift shaft (3) is surrounded, in an enlarged portion (4) of its bearing bore (2), by a concentrically arranged, radially expandable spring element (6 or 13) which has recesses (A, B and C or A', B' and C') at mutually facing edges (11 and 12 or 17 and 18) and is axially fixed in the housing (1) and
- the gear-shift shaft (3) is provided with a radially projecting bolt (5) extending between the mutually facing edges (11 and 12 or 17 and 18).

2. A positioning device according to claim 1, characterised in that
- the concentrically arranged, radially expandable spring element is formed by a C-shaped cylindrical spring sleeve (6) of spring steel or of a suitable plastics material.

3. A positioning device according to claim 1, characterised in that
- the concentrically arranged, radially expandable spring element is formed by a substantially coil-shaped bent wire part (13) having edge parts (17 and 18) facing one another via annular parts (14 and 15).

4. A positioning device according to claims 1 to 3, characterised in that
- the radially expandable spring elements (13) extend spirally in an axial view and therefore form radially offset, mutually opposing edges (17' and 18') which cooperate in a rolling manner with corresponding groove roller rings (20 and 21) received on a modified bolt (19).

5. A positioning device according to claim 1, characterised in that
- the radially expandable spring element (6' or 13') arranged concentrically to the gear-shift shaft (3) is provided with additional recesses (D, E and F) arranged at least at one axial end and
- these additional recesses (D, E and F) co-operate with an axially acting bolt/spring arrangement (23 or 26).

6. A positioning device according to claim 5, characterised in that
- the C-shaped spring sleeve (6') with its recesses (D, E and F) co-operates with a resilient tongue (23) which is cut away by a slot (22) on the holding disc (7') and forms a bolt head (24), the holding disc (7') being secured against rotation by a screw (21).

7. A positioning device according to claim 5, characterised in that
- the bent wire part (13') with its recesses (D', E' and F') co-operates with a pin (26) fixed in the housing (1), the annular part (15') providing the axial spring force.

8. A positioning device according to claim 5, characterised in that
- the C-shaped spring sleeve (6'') is provided at least at an axial end with a radial flange face (28) on which the recesses (D'', E'' and F'') are constructed and a ball/spring arrangement (30/32) opposing them is arranged in an axial bore in a closure member (30).

9. A positioning device according to claim 8, characterised in that
- the C-shaped spring sleeve (6'') is provided, at the axial end remote from the closure member (33), with a further angled flange face (27) in which there is constructed a further central recess (G) which cooperates with a further ball/spring arrangement (29/31).

10. A positioning device according to claim 1, characterised in that
- the radially expandable spring element (6''') surrounding the gear-shift shaft (3) in the enlarged portion (4') of its bearing bore (2) is provided, on its side remote from its longitudinal slot (9), with an axial semi-circular fold (35) which is secured non-rotatably in a semi-circular groove (36) in the housing (1').

## Revendications

1. Dispositif de positionnement pour des axes de levier de changement de vitesse (3) de boîtes de vitesses qui sont disposés dans un carter (1) en pouvant tourner dans le sens radial et coulisser dans le sens axial pour réaliser des déplacements de changement de vitesse, de présélection et d'embrayage et qui peuvent être positionnés dans le sens axial et/ou dans le sens radial par l'intermédiaire de dispositifs à crans, à tétons et à ressorts, caractérisé par le fait que l'axe de levier de changement de vitesse (3) est entouré, dans une partie élargie (4) de son logement (2) en forme de perçage, par un organe élastique (6, respectivement 13) qui est disposé d'une manière concentrique, qui peut être élargi dans le sens radial, qui comporte des crans (A, B et C, respectivement A', B' et C') sur des bords tournés l'un vers l'autre (11 et 12, respectivement 17 et 18) et qui est fixé dans le carter (1) dans le sens axial, et que l'axe de levier de changement de vitesse (3) est pourvu d'un goujon (5) qui fait saillie dans le sens radial et qui s'étend entre les bords tournés l'un vers l'autre (11 et 12, respectivement 17 et 18).

2. Dispositif de positionnement selon la revendication 1, caractérisé par le fait que l'organe élastique qui est disposé d'une manière concentrique et qui peut être élargi dans le sens radial est constitué par un manchon élastique cylindrique (6) en forme de C en acier à ressort ou en une matière plastique correspondante.

3. Dispositif de positionnement selon la revendication 1, caractérisé par le fait que l'organe élastique qui est disposé d'une manière concentrique et qui peut être élargi dans le sens radial est constitué par une pièce en fil plié (13), approximativement en forme de bobine, et comportant des parties opposées (17 et 18) qui forment des bords et qui sont reliées entre elles par des parties annulaires (14 et 15).

4. Dispositif de positionnement selon l'une des revendications 1 à 3, caractérisé par le fait que les organes élastiques (13) qui peuvent être élargis dans le sens radial s'étendent en forme de spirale lorsqu'ils sont vus dans le sens axial, et qu'ils forment de ce fait des bords (17' et 18') qui sont décalés dans le sens radial, qui se font face et qui coopèrent en roulement avec des bagues de roulement à gorge correspondantes (20 et 21) reçues sur un goujon modifié (19).

5. Dispositif de positionnement selon la revendication 1, caractérisé par le fait que l'organe élastique (6', respectivement 13') qui est disposé d'une manière concentrique par rapport à l'axe de levier de changement de vitesse (3) et qui peut être élargi dans le sens radial est pourvu de crans supplémentaires (D, E et F) qui sont disposés sur au moins une extrémité dans le sens axial, et que ceux-ci coopèrent avec un dispositif à téton et à ressort (23, respectivement 26) qui agit dans le sens axial.

6. Dispositif de positionnement selon la revendication 5, caractérisé par le fait que le manchon élastique (6') en forme de C coopère par ses crans (D, E et F) avec une languette (23) qui est découpée dans le disque de retenue (7') au moyen d'une fente (22) et qui constitue une tête de téton (24), le disque de retenue (7') étant fixé en rotation par l'intermédiaire d'une vis (25).

7. Dispositif de positionnement selon la revendication 5, caractérisé par le fait que la pièce en fil plié (13') coopère par ses crans (D', E' et F') avec une cheville (26) qui est fixée dans le carter (1), la partie annulaire (15') exerçant la force élastique axiale.

8. Dispositif de positionnement selon la revendication 5, caractérisé par le fait que le manchon élastique (6'') en forme de C est pourvu, du moins à l'une de ses extrémités dans le sens axial, d'une surface radiale en forme de bride (28) sur laquelle sont formés les crans (D'', E'' et F''), et qu'un dispositif à bille et à ressort (30/32) qui fait face à celle-ci est disposé dans un perçage axial ménagé dans une pièce de fermeture (33).

9. Dispositif de positionnement selon la revendication 8, caractérisé par le fait que le manchon élastique (6'') en forme de C est pourvu, à son extrémité qui est opposée à la pièce de fermeture (33) dans le sens axial, d'une autre surface pliée en forme de bride (27) dans laquelle est formé un autre cran central (G) coopérant avec un autre dispositif à bille et à ressort (29/31).

10. Dispositif de positionnement selon la revendication 1, caractérisé par le fait que l'organe élastique (6''') qui entoure l'axe de levier de changement de vitesse (3) dans la partie élargie (4) de son logement (2) en forme de perçage et qui peut être élargi dans le sens radial est muni, sur son côté opposé à sa fente longitudinale (9), d'un repli axial (35) en demi-cercle qui est fixé en rotation dans une rainure en demi-cercle (36) ménagée dans le carter (1').
